(19)

Europäisches
Patentamt
European
Patent Office
Office européen
des brevets

(11) **EP 2 633 987 B1**

(12) **EUROPEAN PATENT SPECIFICATION**

(45) Date of publication and mention
of the grant of the patent:
**04.03.2015 Bulletin 2015/10**

(21) Application number: **11836489.2**

(22) Date of filing: **31.10.2011**

(51) Int Cl.:
*B29D 30/08* (2006.01)   *B29C 33/02* (2006.01)
*B29C 35/02* (2006.01)   *B29D 30/58* (2006.01)
*B60C 1/00* (2006.01)   *B60C 9/20* (2006.01)
*B29D 30/06* (2006.01)   *B29D 30/54* (2006.01)
*B29D 30/56* (2006.01)

(86) International application number:
**PCT/JP2011/075115**

(87) International publication number:
**WO 2012/057357 (03.05.2012 Gazette 2012/18)**

(54) **METHOD FOR PRODUCING A TIRE CASING AND A TIRE**

VERFAHREN ZUR HERSTELLUNG EINER REIFENKARKASSE UND EINES REIFENS

PROCEDE DE PRODUCTION D'UNE ENVELOPPE DE PNEU ET D'UN PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010   JP 2010244784
29.10.2010   JP 2010244782**

(43) Date of publication of application:
**04.09.2013   Bulletin 2013/36**

(73) Proprietor: **Bridgestone Corporation
Tokyo 104-8340 (JP)**

(72) Inventors:
 • **YANAI, Kenjiro
Kodaira-shi
Tokyo 187-8531 (JP)**

 • **KANOU, Motoaki
Kodaira-shi
Tokyo 187-8531 (JP)**

(74) Representative: **Lamb, Martin John Carstairs
Marks & Clerk LLP
90 Long Acre
London WC2E 9RA (GB)**

(56) References cited:
**JP-A- 2002 069 237     JP-A- 2006 117 099
JP-A- 2008 266 517     JP-A- 2009 051 481
JP-A- 2010 144 067**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

Technical Field

The present invention relates to a method for producing a tire casing and a tire having reduced rolling resistance and improved durability.

Background Art

Heretofore, since the rolling resistance of a tire can be reduced by reducing the heat generation from the entire tire to thereby increase fuel economy, it is desired to lower the heat generation from tires. For lowering the heat generation from tires, compounding the tread rubber composition is mainly improved. Further, as a method for reducing the rolling resistance, it may be taken into consideration to use carbon black of low reinforceability and to reduce the amount of carbon black to be used, which, however, results in degradation of the necessary performance, durability. Accordingly, rubber excellent in low-heat-generation property and durability is needed.

In consideration of environmental implications, retreading that enables resource saving is needed and, in particular, highly-durable tire casing members are needed for enabling repeated retreading. For improving the durability of tires, it is desired to improve the wedge rubber at the edge of tire belt layers. For example, Patent Reference 1 discloses a proposal of improving the durability of tires by incorporating an organic acid cobalt salt in the rubber composition for wedge rubber in an appropriate amount as the cobalt amount relative to 100% by mass of the composition to thereby improve the adhesiveness between steel cords and the coating rubber and the antiaging performance of the rubber.

Also for improving the durability of tires, it is desired to improve fracture resistance of not only the coating rubber for tire carcass ply but also the inner liner b layer arranged between the coating rubber and the inner liner a layer serving as an air penetration-preventing layer. For example, Patent Reference 2 proposes incorporating a small amount of a cobalt-based steel cord compounding adhesive in the inner liner b layer.

For increasing the universality of tire production, various tire production methods where tires are vulcanized in two stages are being developed.

For example, Patent Reference 3 proposes a tire production method, wherein the tire molding and vulcanizing step is divided into independent two stages A and B, in the stage A, the tire is so assembled as to comprise at least one carcass layer and at most a part of a tread strip as the outermost layer in the radial direction, and subsequently also the surface is vulcanized in a vulcanization mold capable of imparting a predetermined cross-sectional profile to one or a large number of strength carriers, and in the stage B, the tire part is also similarly vulcanized.

Patent Reference 4 discloses a tire production method, wherein a partial tire is constructed in the step A and the partial tire is subsequently vulcanized, and in the step B, the whole or the remaining part of an unvulcanized tread is added to the partial tire and then vulcanized to give a complete tire, and wherein, in particular, the surface of the whole or the remaining part of the unvulcanized tread is at least partially plasma-treated.

Further, Patent Reference 5 proposes a tire production method, in which a two-stage vulcanization system is employed for passenger car tires, and which comprises a first vulcanization step of integrating a spiral reinforcing layer and a tread and then patterning the tread, and a second vulcanization step of setting the primary vulcanized product obtained in the first vulcanization step in the outer periphery of a radial carcass ply of a casing side member and then vulcanizing and molding it.

However, according to these tire production methods, the rolling resistance of the tire could not be reduced and the durability thereof could not be improved.

Accordingly, it is desired to improve tire production methods from the viewpoint of reducing the rolling resistance and improving the durability of tires.

Citation List

Patent References

    Patent Reference 1: JP-A-2008-62893
    Patent Reference 2: JP-A-09-272308
    Patent Reference 3: JP-A-08-258179
    Patent Reference 4: JP-A-2000-79640
    Patent Reference 5: JP-A-2006-111072

JP2002069237 discloses a rubber composition suitable for a cushion rubber for joining a reclaimed tread rubber and a reclaimed tire required for the manufacture of a retreaded tire for a radial tire for trucks and buses. JP2006117099 provides a long life pneumatic radial tire for heavy load. JP2010144067 discloses a rubber composition for a tire belt cushion and a tire upper bead filler. JP2009051481 provides a tread for a retreaded tire in order to improve the heat generation of a tread rubber and inhibit any drop of the peel strength at the retreading surface between a tread and a base tire. JP2008266517 provides a rubber composition for tire inner liner causing no decline in its rupture properties while improving its gas-barrier tendency.

Summary of the Invention

Problems that the Invention is to Solve

Given the situation as above, an object of the present invention is to provide a method for producing a tire having reduced rolling resistance and improved durability.

Means for Solving the Problems

For solving the above-mentioned problems, the present inventors have found that, when along with using a tire production method of bonding a vulcanized tire casing and a precured tread member and integrally vulcanizing and molding them to give a tire, a specific belt wedge rubber is used in the belt portion or a specific rubber composition is used for a predetermined layer of an inner liner, then the problems with the present invention can be solved, and have completed the present invention.

Specifically, the present invention provides the following:

[1] A method for producing a tire casing by vulcanizing a casing portion comprising a belt portion composed of multiple belt layers, a side portion and a bead portion, the method including at least one method selected from the following (a) and (b):

(a) in which a rubber composition containing carbon black having a nitrogen adsorption specific surface area of from 38 to 99 m$^2$/g as defined in JIS K 6217-2:2001, in an amount of from 40 to 60 parts by mass relative to 100 parts by mass of the rubber component therein is used as the belt wedge rubber of the belt portion;
(b) in which the tire casing comprises a carcass ply and an inner liner composed of multiple layers, and a rubber composition containing carbon black having a nitrogen adsorption specific surface area of from 25 to 60 m$^2$/g as defined in JIS K 6217-2:2001, in an amount of from 45 to 60 parts by mass relative to 100 parts by mass of the rubber component therein is used as the layer of the inner liner adjacent to the carcass ply;

and
[2] A method for producing a tire by molding a tire casing through vulcanization of a casing portion comprising a belt portion composed of multiple belt layers, a side portion and a bead portion, vulcanizing a tread member having at least a tread portion to form a precured tread member, and thereafter bonding the tire casing and the precured tread member together and integrally vulcanizing and molding them into a tire, the method including at least one method selected from the following (a) and (b):

(a) in which a rubber composition containing carbon black having a nitrogen adsorption specific surface area of from 38 to 99 m$^2$/g as defined in JIS K 6217-2:2001, in an amount of from 40 to 60 parts by mass relative to 100 parts by mass of the rubber component therein is used as the belt wedge rubber of the belt portion;
(b) in which the tire casing comprises a carcass ply and an inner liner composed of multiple layers, and a rubber composition containing carbon black having a nitrogen adsorption specific surface area of from 25 to 60 m$^2$/g as defined in JIS K 6217-2:2001, in an amount of from 45 to 60 parts by mass relative to 100 parts by mass of the rubber component therein is used as the layer of the inner liner adjacent to the carcass ply.

Advantageous Effects of the Invention

According to the present invention, there is provided a method for producing a tire casing or a tire having reduced rolling resistance (or that is, having improved low-heat-generation property) and having improved durability. According to the production method for a tire casing or a tire of the present invention (hereinafter this may be referred to as the production method of the invention), the degree of vulcanization of the belt portion, or the degree of vulcanization of the belt portion and the carcass ply inside the belt portion can be lowered and, as consequently, the rolling resistance of the tire can be further reduced and the fracture resistance thereof after long-term running of the tire can be improved more.

Brief Description of the Drawings

[Fig. 1] This is a schematic cross-sectional view showing one example of a tire obtained according to the production method of the present invention.
[Fig. 2] This is a schematic cross-sectional view showing another example of a tire obtained according to the production method of the present invention.
[Fig. 3] This is a partly-cut, schematic cross-sectional view showing the belt portion of one example of a tire obtained according to the production method of the present invention.
[Fig. 4] This is a schematic cross-sectional view showing one example of a tire casing and a precured tread member for use in the production method of the present invention.
[Fig. 5] This is a schematic cross-sectional view showing another example of a tire casing and a precured tread member for use in the production method of the present invention. Mode for Carrying out the Invention

The method for producing a tire casing of the present invention comprises vulcanizing a casing portion comprising a belt portion composed of multiple belt layers, a side portion and a bead portion, and the production method includes at least one method selected from the following (a) and (b):

(a) in which a rubber composition containing carbon black having a nitrogen adsorption specific surface area of from 38 to 99 $m^2$/g as defined in JIS K 6217-2:2001, in an amount of from 40 to 60 parts by mass relative to 100 parts by mass of the rubber component therein is used as the belt wedge rubber of the belt portion;
(b) in which the tire casing comprises a carcass ply and an inner liner composed of multiple layers, and a rubber composition containing carbon black having a nitrogen adsorption specific surface area of from 25 to 60 $m^2$/g as defined in JIS K 6217-2:2001, in an amount of from 45 to 60 parts by mass relative to 100 parts by mass of the rubber component therein is used as the layer of the inner liner adjacent to the carcass ply.

The tire casing production method comprises vulcanizing a casing portion comprising a belt portion, a side portion and a bead portion to form a tire casing. Different from this, regarding a thick-gauge tire such as a heavy loading tire or the like produced according to conventional one-stage vulcanization, the thermal conductivity of rubber is low, and during vulcanization, the temperature increase in the inside area of the tire is lower than that in the surface area thereof, and the rubber properties of the tire after vulcanization differ between the area around the surface of the tire and the inside area thereof; however, the difference is solved in the tire produced according to the method of the present invention, and the tire can effectively bring out the characteristics that the belt wedge rubber and the rubber layer of the inner liner adjacent to carcass ply naturally have, and, as a result, the tire has a low-heat-generation property and the cracking resistance (crack growth resistance) thereof after long-term use can be significantly improved.

The method for producing a tire of the present invention comprises forming a tire casing through vulcanization of a casing portion comprising a belt portion composed of multiple belt layers, a side portion and a bead portion, vulcanizing a tread member having at least a tread portion to form a precured tread member, and thereafter bonding the tire casing and the precured tread member together and integrally vulcanizing and molding them into a tire, and the method includes at least one method selected from the following (a) and (b):

(a) in which a rubber composition containing carbon black having a nitrogen adsorption specific surface area of from 38 to 99 $m^2$/g as defined in JIS K 6217-2:2001, in an amount of from 40 to 60 parts by mass relative to 100 parts by mass of the rubber component therein is used as the belt wedge rubber of the belt portion;
(b) in which the tire casing comprises a carcass ply and an inner liner composed of multiple layers, and a rubber composition containing carbon black having a nitrogen adsorption specific surface area of from 25 to 60 $m^2$/g as defined in JIS K 6217-2:2001, in an amount of from 45 to 60 parts by mass relative to 100 parts by mass of the rubber component therein is used as the layer of the inner liner adjacent to the carcass ply.

The first aspect of the tire production method of the present invention in which the rubber composition is used as the belt wedge rubber, and the second aspect thereof in which the rubber composition is used as the layer of the inner liner adjacent to the carcass ply are described separately in detail hereinunder.

The first aspect of the tire casing production method of the present invention comprises vulcanizing a casing portion comprising a belt portion composed of multiple belt layers, a side portion and a bead portion, wherein a rubber composition containing carbon black having a nitrogen adsorption specific surface area of from 38 to 99 $m^2$/g as defined in JIS K 6217-2:2001, in an amount of from 40 to 60 parts by mass relative to 100 parts by mass of the rubber component therein is used as the belt wedge rubber of the belt portion.

The first aspect of the tire production method of the present invention comprises forming a tire casing through vulcanization of a casing portion comprising a belt portion composed of multiple belt layers, a side portion and a bead portion, vulcanizing a tread member having at least a tread portion to form a precured tread member, and thereafter bonding the tire casing and the precured tread member together and integrally vulcanizing and molding them into a tire, wherein a rubber composition containing carbon black having a nitrogen adsorption specific surface area of from 38 to 99 $m^2$/g as defined in JIS K 6217-2:2001, in an amount of from 40 to 60 parts by mass relative to 100 parts by mass of the rubber component therein is used as the belt wedge rubber of the belt portion.

The carbon black must have a nitrogen adsorption specific surface area of from 38 to 99 $m^2$/g. This is because, when at least 38 $m^2$/g, then the belt wedge rubber can secure the strength, and when at most 99 $m^2$/g, then the low-heat-generation property and the fatigue resistance of the belt wedge rubber can be good; and when falling within the range, the low-heat-generation property and the durability of the tire can be bettered. From these viewpoints, the nitrogen adsorption specific surface area is more preferably from 38 to 90 $m^2$/g.

The amount of the carbon black to be incorporated must be from 40 to 60 parts by mass. This is because, when at least 40 parts by mass, then the belt wedge rubber can secure the strength, and when at most 60 parts by mass, then the low-heat-generation property and the fatigue resistance of the belt wedge rubber can be good; and when falling within the range, the low-heat-generation property and the durability of the tire can be bettered. From these viewpoints, the amount of the carbon black to be incorporated is more preferably from 40 to 50 parts by mass.

The members of the tire in the first aspect of the production method of the present invention are described below.

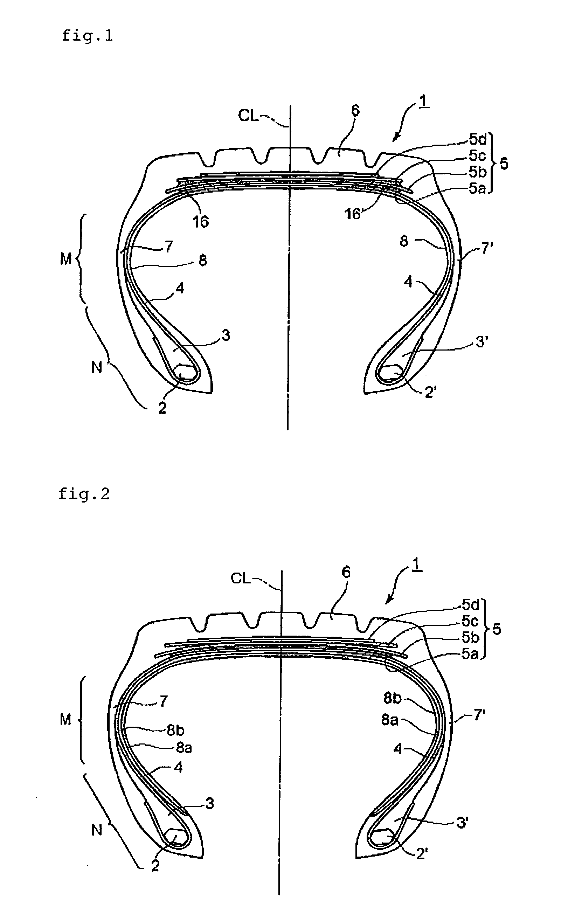

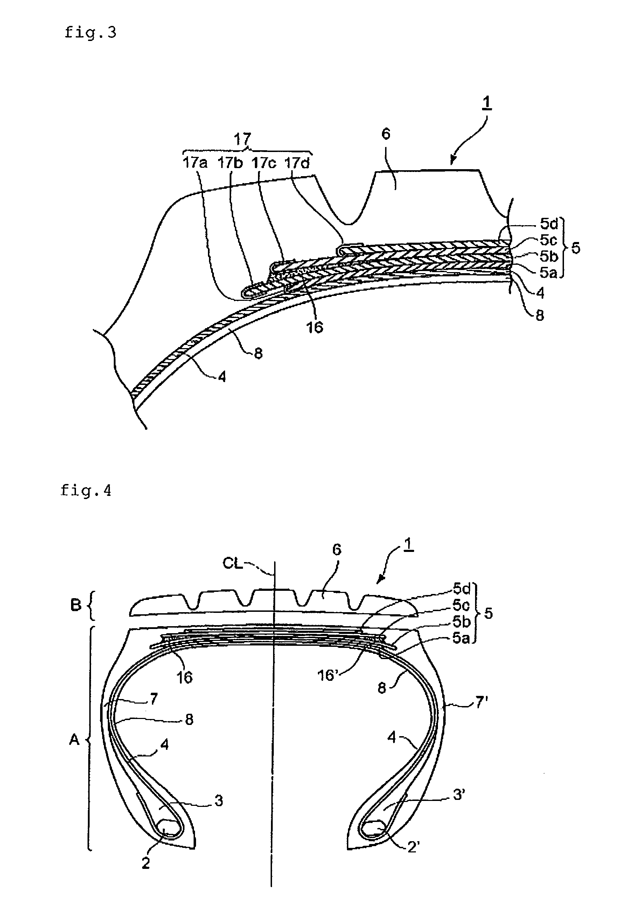

Fig. 1 is a schematic cross-sectional view showing one example of the tire to be obtained according to the first aspect of the production method of the present invention; Fig. 3 is a partially-cut schematic cross-sectional view showing the belt portion of one example of the tire to be obtained according to the first aspect of the production method of the present invention.

In the example of the tire 1, stiffeners 3 and 3' extend outside in the tire radial direction from a pair of bead cores 2 and 2', respectively, and a belt portion 5 comprising multiple belt layers (four layers of 5a to 5d in Fig. 1) is arranged outside in the tire radial direction of the carcass ply 4 that is folded from the bead core 2 outside the stiffener 3 to form a toroidal tire casing form, folded at the bead core 2' on the opposite side and fixed outside the stiffener 3'. A tread portion 6 is arranged outside in the tire radial direction of the belt portion 5. Outside the carcass ply 4 and between the tread portion 6 and the stiffener 3, arranged is a sidewall rubber 7. The portion where the sidewall rubber 7 is arranged is referred to as a side portion M, and the inside portion in the tire radial direction of the side portion M is referred to as a bead portion N. In the bead portion N, arranged are the bead cores 2 and 2', the stiffeners 3 and 3', etc. Inside the carcass ply 4, arranged is an inner liner 8 serving as an air penetration-preventing layer.

The belt portion 5 is further described in detail. As in Fig. 3, in the belt layers 5a to 5d (an innermost belt layer 5a, an inside belt layer 5b to form a crossing layer, an outside belt layer 5c to form a crossing layer, and an outermost belt layer 5d), belt wedge rubbers 16 and 16' are arranged between the vicinity of the end of the inside belt layer 5b to form a crossing layer and the vicinity of the end of the outside belt layer 5c to form a crossing layer, and at the end of each of the belt layers 5a to 5d, arranged is a belt end cover rubber 17 (17a to 17d) to cover the end of each layer. The belt portion 5 includes the belt wedge rubbers 16 and 16' and the belt end cover rubber 17. The belt wedge rubbers 16 and 16' are important members to reduce the shear strain between the inside belt layer 5b and the outside belt layer 5c each forming a crossing layer, and to improve the durability of the belt portion 5.

Fig. 4 is a schematic cross-sectional view showing an example of a tire casing A and a precured tread member B for use in the first aspect of the production method of the present invention. In the first aspect of the present invention, the casing portion comprising at least a belt portion 5, a side portion M and a bead portion N is vulcanized to form the tire casing A. In general, in the tire casing A, there is arranged a thin layer of a part of tread rubber outside in the tire radial direction of the belt portion 5. This is for bettering the bonding of the tire casing to the precured tread member B.

The second aspect of the tire casing production method of the present invention comprises vulcanizing a casing portion comprising a belt portion composed of multiple belt layers, a carcass ply, an inner liner composed of multiple layers, a side portion and a bead portion, wherein a rubber composition containing carbon black having a nitrogen adsorption specific surface area of from 25 to 60 $m^2$/g as defined in JIS K 6217-2:2001, in an amount of from 45 to 60 parts by mass relative to 100 parts by mass of the rubber component therein is used as the layer of the inner liner adjacent to the carcass ply.

The second aspect of the tire production method of the present invention comprises forming a tire casing through vulcanization of a casing portion comprising a belt portion composed of multiple belt layers, a carcass ply, an inner liner composed of multiple layers, a side portion and a bead portion, vulcanizing a tread member having at least a tread portion to form a precured tread member, and thereafter bonding the tire casing and the precured tread member together and integrally vulcanizing and molding them into a tire, wherein a rubber composition containing carbon black having a nitrogen adsorption specific surface area of from 25 to 60 m$^2$/g as defined in JIS K 6217-2:2001, in an amount of from 45 to 60 parts by mass relative to 100 parts by mass of the rubber component therein is used as the layer of the inner liner adjacent to the carcass ply.

The carbon black must have a nitrogen adsorption specific surface area of from 25 to 60 m$^2$/g. This is because, when at least 25 m$^2$/g, then the layer of the inner liner adjacent to the carcass ply can secure the strength, and when at most 60 m$^2$/g, then the low-heat-generation property and the fatigue resistance of the layer of the inner liner adjacent to the carcass ply can be good; and when falling within the range, the low-heat-generation property and the durability of the tire can be bettered. From these viewpoints, the nitrogen adsorption specific surface area is more preferably from 25 to 50 m$^2$/g.

The amount of the carbon black to be incorporated must be from 45 to 60 parts by mass. This is because, when at least 45 parts by mass, then the layer of the inner liner adjacent to the carcass ply can secure the strength, and when at most 60 parts by mass, then the low-heat-generation property and the fatigue resistance of the layer of the inner layer adjacent to the carcass ply can be good; and when falling within the range, the low-heat-generation property and the durability of the tire can be bettered.

The vulcanization in the first and second aspects of the tire production method of the present invention may be hereinafter referred to as "two-stage vulcanization". The conventional method of vulcanizing an unvulcanized tire at a time may be hereinafter referred to as "one-stage vulcanization".

The members of the tire in the second aspect of the production method of the present invention are described below.

Fig. 2 is a schematic cross-sectional view showing one example of the tire to be obtained according to the second aspect of the production method of the present invention.

In the example of the tire 1, stiffeners 3 and 3' extend outside in the tire radial direction from a pair of bead cores 2 and 2', respectively, and a belt portion 5 comprising multiple belt layers (four layers of an innermost belt layer 5a, an inside belt layer 5b to form a crossing layer, an outside belt layer 5c to form a crossing layer, and an outermost belt layer 5d in Fig. 2) is arranged outside in the tire radial direction of the carcass ply 4 that is folded from the bead core 2 outside the stiffener 3 to form a toroidal tire casing form, folded at the bead core 2' on the opposite side and fixed outside the stiffener 3'. A tread portion 6 is arranged outside in the tire radial direction of the belt portion 5. Outside the carcass ply 4 and between the tread portion 6 and the stiffener 3, arranged is a sidewall rubber 7. The portion where the sidewall rubber 7 is arranged is referred to as a side portion M, and the inside portion in the tire radial direction of the side portion M is referred to as a bead portion N. In the bead portion N, arranged are the bead cores 2 and 2', the stiffeners 3 and 3', etc. Inside the carcass ply 4, arranged is an inner liner a layer 8a serving as an air penetration-preventing layer. In the present invention, an inner liner b layer 8b adjacent to the carcass ply 4 is arranged between the carcass ply 4 and the inner liner a layer 8a. In Fig. 2, the inner liner 8 is composed of the inner liner a layer 8a and the inner liner b layer 8b. If desired, the inner liner 8 may further have an interlayer in addition to the inner liner a layer 8a and the inner liner b layer 8b. The carcass ply 4 is formed of steel cords and a coating rubber composition.

The center line CL in the tire cross-sectional view shown in Figs. 1, 2, 4 and 5 is referred to as a crown center.

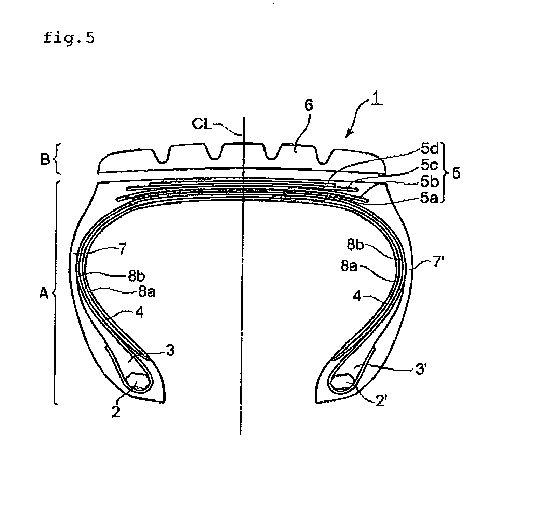

Fig. 5 is a schematic cross-sectional view showing one example of a tire casing A and a precured tread member B for use in the second aspect of the production method of the present invention. In the second aspect of the production method of the present invention, a casing portion comprising at least a belt portion, a carcass ply, an inner liner composed of multiple layers, a side portion and a bead portion is vulcanized to form the tire casing A. In general, in the tire casing A, there is arranged a thin layer of a part of tread rubber outside in the tire radial direction of the belt portion 5. This is for bettering the bonding of the tire casing to the precured tread member B.

[Belt Wedge Rubber]

(Carbon Black)

As the carbon black having a nitrogen adsorption specific surface area of from 38 to 99 m$^2$/g as defined in JIS K 6217-2:2001 that is used in the rubber composition for the belt wedge rubber 16 in the belt portion 5 in the present invention, for example, there are mentioned HAF (nitrogen adsorption specific surface area: 75 to 80 m$^2$/g), HS-HAF (nitrogen adsorption specific surface area: 78 to 83 m$^2$/g), LS-HAF (nitrogen adsorption specific surface area: 80 to 85 m$^2$/g), FEF (nitrogen adsorption specific surface area: 40 to 42 m$^2$/g), N339 (nitrogen adsorption specific surface area: 88 to 96 m$^2$/g), LI-HAF (nitrogen adsorption specific surface area: 73 to 75 m$^2$/g), IISAF (nitrogen adsorption specific surface area: 97 to 98 m$^2$/g), HS-IISAF (nitrogen adsorption specific surface area: 98 to 99 m$^2$/g), etc. Of those, preferred are HAF, HS-HAF, LS-HAF, FEF and LI-HAF from the viewpoint of satisfying both low-heat-generation property and durability.

[Rubber Composition for Inner Liner b Layer]

(Carbon Black)

As the carbon black having a nitrogen adsorption specific surface area of from 25 to 60 $m^2/g$ as defined in JIS K 6217-2:2001 that is used in the rubber composition for the inner liner b layer in the present invention, for example, there are mentioned FEF (nitrogen adsorption specific surface area: 40 to 42 $m^2/g$), GPF (nitrogen adsorption specific surface area: 26 to 28 $m^2/g$), SRF (nitrogen adsorption specific surface area: 25 to 28 $m^2/g$), MAF (nitrogen adsorption specific surface area: 45 to 52 $m^2/g$), HS-MAF (nitrogen adsorption specific surface area: 504 to 58 $m^2/g$), etc. Of those, preferred are FEF and GPF.

(Silica)

In addition to carbon black, if desired, silica may be incorporated in the rubber composition for the belt wedge rubber 16 in the belt portion 5 in the present invention. Preferably, silica is incorporated in an amount of at most 10 parts by mass relative to 100 parts by mass of the rubber component in the rubber composition for the belt wedge rubber 16.
Also in addition to carbon black, if desired, silica may be incorporated in the rubber composition for the inner liner b layer in the present invention. Preferably, silica is incorporated in an amount of at most 10 parts by mass relative to 100 parts by mass of the rubber component in the rubber composition for the inner liner b layer.
Any commercially-available silica is usable here, but above all, preferred is precipitated silica, fumed silica or colloidal silica, and more preferred is precipitated silica. Preferably, the BET specific surface area (as measured according to ISO 5794/1) of silica for use herein is from 40 to 350 $m^2/g$. Silica of which the BET specific surface area falls within the range is advantageous in that it satisfies both rubber-reinforcing capability and dispersibility in the rubber component. From this viewpoint, silica of which the BET specific surface area falls within a range of from 80 to 350 $m^2/g$ is more preferred; silica of which the BET specific surface area falls within a range of from 120 to 350 $m^2/g$ is even more preferred. As silicas of those types, usable here are commercial products of Tosoh Silica's trade names " Nipsil AQ" (BET specific surface area = 220 $m^2/g$) and "Nipsil KQ"; Degussa's trade name "Ultrasil VN3" (BET specific surface area = 175 $m^2/g$), etc.

(Rubber Component)

As the rubber component for use in the rubber composition for the belt wedge rubber 16 in the belt portion 5 and for use in the rubber composition for the inner liner b layer in the present invention, preferred is natural rubber and/or synthetic polyisoprene rubber (IR), and more preferred is natural rubber. In combined use with any other synthetic rubber, it is desirable that natural rubber accounts for at least 60% by mass of the rubber component, more preferably at least 70% by mass, even more preferably at least 80% by mass. Especially preferred is use of natural rubber alone.
The other synthetic rubber includes polybutadiene rubber (BR), styrene-butadiene copolymer (SBR), styrene-isoprene copolymer (SIR), etc.

(Adhesion Promoter)

If desired, in the rubber composition for the belt wedge rubber 16 in the belt portion 5 in the present invention, an organic acid cobalt salt may be incorporated in an amount of at most 0.3 parts by mass as the cobalt amount relative to 100 parts by mass of the rubber component therein, more preferably in an amount of at most 0.2 parts by mass, even more preferably at most 0.1 parts by mass. Incorporating a small amount of an organic acid cobalt salt in the rubber composition is preferred from the viewpoint of preventing the organic acid cobalt salt from moving from the belt coating rubber and improving the adhesion between steel cords and the coating rubber; however, from the viewpoint of enhancing the antiaging property of the belt wedge rubber 16, it is desirable that an organic acid cobalt salt is not incorporated in the rubber composition.
Preferably, in the rubber composition for the inner liner b layer in the present invention, an organic acid cobalt salt is incorporated in an amount of at most 0.4 parts by mass as the cobalt amount relative to 100 parts by mass of the rubber component therein, more preferably in an amount of from 0.01 to 0.4 parts by mass, even more preferably from 0.02 to 0.3 parts by mass. Incorporating an organic acid cobalt salt in an amount of at most 0.4 parts by mass as the cobalt amount can favorably prevent the reduction in the antiaging property of the inner liner b layer. Incorporating an organic acid cobalt salt in an amount of at least 0.01 parts by mass as the cobalt amount is more preferred as increasing the initial adhesiveness of the composition.
The organic acid cobalt salt includes cobalt naphthenate, cobalt rosinate, cobalt stearate, other cobalt salts of linear or branched monocarboxylic acids having from 5 to 20 carbon atoms or so (for example, trade name "Manobond C" Series by OM Group Inc.), etc.

(Vulcanizing Agent)

Preferably, in the rubber composition for the belt wedge rubber 16 in the belt portion 5 and in the rubber composition for the inner liner b layer, sulfur is incorporated as a vulcanizing agent, in an amount of at most 7.0 parts by mass relative to 100 parts by mass of the rubber component therein. More preferably, the amount falls within a range of from 3.0 to 7.0 parts by mass, even more preferably from 4.0 to 6.0 parts by mass. Incorporating sulfur in an amount of at most 7.0 parts by mass can favorably prevent the aging resistance of the belt wedge rubber 16 and the aging resistance of the inner liner b layer from lowering. Incorporating sulfur in an amount of at least 3.0 parts by mass is more preferred as improving the initial adhesiveness of the coating rubber composition and the initial adhesiveness of the inner liner b layer.

(Other Additives)

In addition to the above-mentioned components, any other additives, for example, a vulcanization activator such as zinc flower, organic acid (stearic acid, etc.) or the like, a vulcanization accelerator, an inorganic filler except silica, an antiaging agent, an ozone degradation inhibitor, a softening agent or the like may be added to the rubber composition for the belt wedge rubber 16 in the belt portion 5 and the rubber composition for the inner liner b layer.

As the vulcanization accelerator, preferably used here is a sulfenamide-type accelerator such as N,N'-dicyclohexyl-2-benzothiazolylsulfenamide, N-cyclohexyl-2-benzothiazolylsulfenamide, N-tert-butyl-2-benzothiazolylsulfenamide, N-oxydiethylene-2-benzothiazolylsulfenamide, etc. If desired, also usable are a thiazol-type accelerator such as 2-mercaptobenzothiazole, di-2-benzothiazolyl disulfide, etc.; a thiuram-type accelerator such as tetrabenzylthiuram disulfide, tetramethylthiuram disulfide, tetraethylthiuram disulfide, tetrakis(2-ethylhexyl)thiuram disulfide, tetramethylthiuram monosulfide, etc.

(Vulcanizate Physical Property of Belt Wedge Rubber in Belt Portion 5)

Tan$\delta$ of the belt wedge rubber 16 in the belt portion 5 is preferably at most 0.17 from the viewpoint of improving the low-heat-generation property of the tire. Here tan$\delta$ is measured, using Toyo Seiki's spectrometer (dynamic viscoelastometer), under an initial load of 160 g and at a frequency of 52 Hz, a measurement temperature of 23°C and a strain of 2%.

(Vulcanizate Physical Property of Inner Liner b Layer)

Tan$\delta$ of the inner liner b layer is preferably at most 0.17 from the viewpoint of improving the low-heat-generation property of the tire. Here tan$\delta$ is measured as follows: Using Toyo Seiki's spectrometer (dynamic viscoelastometer), rubber of the inner liner b layer at the crown center position of the tire to be analyzed is tested for tan$\delta$ under an initial load of 160 g and at a frequency of 52 Hz, a measurement temperature of 23°C and a strain of 2%.

The kneading apparatus for use for producing the rubber composition for the belt wedge rubber 16 and the inner liner b layer in the present invention includes a Banbury mixer, a roll, an intensive mixer, etc.

In case where the casing portion is vulcanized in producing the tire casing A in the production method of the present invention, first an unvulcanized casing portion is formed. The casing portion can be formed in the same manner as that for a forming process for a green tire in a known tire production method. For example, a carcass ply rubberized with unvulcanized rubber is wound around a forming drum, a bead core is set around both ends thereof, and thereafter the two ends are folded, and further unvulcanized rubber of a sidewall portion is stuck thereto. Next, the center part in the width direction is expanded to form a toroidal form of which the cross section is toroidal, and thereafter an unvulcanized belt layer is arranged around the outer periphery of the carcass layer, and preferably a thin layer having the same rubber composition as that of the inner layer of the tread portion 6 is stuck thereonto to provide a casing portion.

The casing portion is set in a vulcanization device (mold), and vulcanized and mold therein to thereby produce the tire casing A having a part of the tread portion 6 or not having the tread portion 6 at all.

In the production method of the present invention, preferably, the vulcanization method for the casing portion (unvulcanized tire casing A) is a method of surrounding the outside of the casing portion by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

In ordinary heavy loading tires (for example, pneumatic radial tires for trucks or busses), the thickness of the belt portion side of the casing portion is small as compared with the maximum thickness of the bead portion N, and therefore there exists a latest vulcanization point inside the bead portion N.

As described above, when a small quantity of heat per unit volume is given to the belt portion side and a large quantity of heat per unit volume is given to the bead portion side, then the belt portion side is not overvulcanized, and favorably as a result, tanδ of the belt wedge rubber 16 in the belt portion 5 is low and the low-heat-generation property of the tire is thereby improved and the cracking resistance thereof is also improved.

When a small quantity of heat per unit volume is given to the belt portion side and a large quantity of heat per unit volume is given to the bead portion side, then the carcass ply on the belt portion side and the shoulder portion (tire shoulder portion) side is not overvulcanized, and favorably as a result, the adhesiveness to steel cords (both the initial adhesiveness and the adhesiveness after long-term use thereto) of the coating rubber composition of the carcass ply 4 betters and the low-heat-generation property of the tire betters.

Regarding the means of imparting a small quantity of heat per unit volume to the belt portion side and imparting a large quantity of heat per unit volume to the bead portion side, in case where the casing portion is vulcanized to produce the tire casing A, for example, the casing portion is put into a vulcanization mold, and pressure and heat are given thereto from inside the casing portion by the use of a vulcanization bladder therein, and in this case, from the first heating means for the part of the vulcanization mold that faces the bead portion N of the casing portion, the casing portion may be heated at a higher temperature, and from the second heating means for the part of the vulcanization mold that faces the belt portion side of the casing portion, the casing portion may be heated at a lower temperature than from the first heating means.

In the first aspect of the production method of the present invention, preferably, the ultimate temperature of belt wedge rubber 16 (especially the latest vulcanization point of the belt wedge rubber 16) during vulcanization of the casing portion is from 110 to 160°C, and the ultimate temperature of the bead portion N (especially the latest vulcanization point of the bead portion N) is from 125 to 180°C, and the vulcanization temperature at the latest vulcanization point of the belt wedge rubber 16 is lower by from 2 to 25°C than the vulcanization temperature at the latest vulcanization point of the bead portion N, more preferably by from 4 to 25°C, even more preferably by from 4 to 20°C. This is for preventing the belt portion side from being overvulcanized and for improving the low-heat-generation property of the belt wedge rubber 16 in the belt portion 5 and improving the cracking resistance after long-term use thereof.

When the ultimate vulcanization temperature of the belt wedge rubber 16 (especially the latest vulcanization point of the belt wedge rubber 16) is 110°C or higher, then the vulcanization can go on favorably; and when 160°C or lower, the cracking resistance after long-term use can better favorably. When the ultimate vulcanization temperature of the bead portion N (especially the latest vulcanization point of the bead part N) is 125°C or higher, then the vulcanization time for the tire casing A can be favorably shortened; and when 180°C or lower, the durability of the bead portion can favorably better.

In the second aspect of the production method of the present invention, preferably, the ultimate vulcanization temperature of the outermost belt layer 5d (especially the latest vulcanization point of the outermost belt layer 5d) during vulcanization of the casing portion is from 110 to 160°C, and the ultimate vulcanization temperature of the bead portion N (especially the latest vulcanization point of the bead portion N) is from 125 to 180°C, and the ultimate vulcanization temperature at the latest vulcanization point of the outermost belt layer is lower by from 2 to 25°C than the ultimate vulcanization temperature of the bead portion N, more preferably by from 4 to 25°C, even more preferably by from 4 to 20°C. This is for preventing the belt portion side from being overvulcanized and for improving the initial adhesiveness to steel cords and the low-heat-generation property of the coating rubber composition for the carcass ply 4 on the belt portion side and the shoulder portion (tire shoulder portion) side.

When the ultimate vulcanization temperature of the outermost belt layer 5d (especially the latest vulcanization point of the outermost belt layer 5d) is 110°C or higher, then the vulcanization can go on favorably; and when 160°C or lower, the initial adhesiveness to steel cords can favorably better. When the ultimate vulcanization temperature of the bead portion N (especially the latest vulcanization point of the bead portion N) is 125°C or higher, then the vulcanization time for the tire casing A can be favorably shortened; and when 180°C or lower, the durability of the bead portion can favorably better.

On the other hand, in case where the precured tread member B is produced, a tread material of an unvulcanized rubber of which the cross section in the width direction is nearly trapezoidal is extruded through an extruder (not shown), and then cut in a predetermined length, and thereafter the thus-cut strip-shaped tread material is set in a vulcanization mold composed of, for example, an upper mold portion and a lower mold potion, and vulcanized therein to give a ring-shaped precured tread member B. In this stage, formed are multiple grooves each extending in the lengthwise direction of the ring-shaped outer surface of the precured tread member B.

The vulcanization condition is preferably at from 100 to 185°C or so and for a period of time for which the precured tread member B can be completely vulcanized.

In the tire casing A and the precured tread member B produced in the manner as above, the tire casing surface that has been kept in contact with the mold surface during vulcanization has the property of hardly crosslinking with the unvulcanized rubber, and therefore for removing (cutting off) the surface layer rubber of the outer surface to be the adhesive face between the tire casing A and the precured tread member B for the purpose of securing the adhesiveness therebetween, it is desirable that the adhesive face between the tire casing A and the precured tread member B is previously buffed by the use of a buffing machine or the like.

Next, the tire casing A and the precured tread member B are bonded together and integrally vulcanized and molded to give the tire 1. In this stage, it is desirable that the tire casing A and the precured tread member B are bonded via an unvulcanized cushion rubber layer, and vulcanized and molded. The unvulcanized cushion rubber layer may be an ordinary sheet-like cushion rubber, or a liquid rubber may be applied to the adhesive face to form the unvulcanized cushion rubber layer thereon.

In the cushion rubber composition for the unvulcanized cushion rubber layer, if desired, various chemicals used in ordinary rubber industry, such as carbon black as a reinforcing filler, as well as a softening agent (oil), an antiaging agent, a crosslinking agent such as sulfur or the like may be suitably incorporated, in addition to rubber components, various vulcanization accelerator components and a crosslinking component used in ordinary rubber compositions. As the rubber component, usable is natural rubber (NR) or synthetic rubber either singly or as combined. The synthetic rubber includes, for example, synthetic polyisoprene rubber, polybutadiene rubber (BR), styrene-butadiene rubber (SBR), butyl rubber, halogenobutyl rubber, etc. As the rubber composition, preferred here is use of a tread rubber composition (especially tread base rubber composition).

Next, the tire casing A to which the precured tread member B has been stuck is conveyed into a vulcanization apparatus not shown (for example, a vulcanizer or a steam pan), in which the unvulcanized cushion rubber layer is vulcanized to give the tire 1. In this stage, the precured tread member B is co-vulcanized and bonded to the outer periphery of the crown portion of the tire casing A.

The vulcanization condition is preferably at from 60 to 140°C or so and for a period of time for which the cushion rubber can be completely vulcanized.

During the vulcanization, the ultimate temperature at the latest vulcanization point of the belt wedge rubber 16 in integrally bonding and vulcanizing the tire casing A and the precured tread member B is preferably lower than the ultimate temperature at the latest vulcanization point of the belt wedge rubber 16. This is for the purpose of optimizing the degree of vulcanization in vulcanizing the casing portion and the total degree of vulcanization in vulcanizing the tire casing A and the precured tread member B so that they could not be excessively too high, whereby the low-heat-generation property and the durability (cracking resistance after long-term use) of the belt wedge rubber 16 in the belt portion 5 can be bettered.

Also in this stage, it is desirable that the ultimate temperature of the carcass ply 4 in the crown center position in integrally bonding and vulcanizing the tire casing A and the precured tread member B is lower than the ultimate temperature of the carcass ply 4 at the crown center position in vulcanizing the casing portion. This is for the purpose of optimizing the degree of vulcanization in vulcanizing the casing portion and the total degree of vulcanization in vulcanizing the tire casing A and the precured tread member B so that they could not be excessively too high, whereby the initial adhesiveness to steel cords, the low-heat-generation property and the durability of the coating rubber composition for carcass ply 4 on the belt portion side and the shoulder portion (tire shoulder portion) side can be bettered.

Examples

The invention is described in more detail with reference to Examples given below, however, the invention is not limited to the following Examples at all.

The low rolling resistance, and the fracture resistance after long-term driving of tire were evaluated according to the methods mentioned below.

<Low Rolling Resistance>

A formed and vulcanized trial tire was tested in a drum test for the resistance occurring on the tire tread in the running direction in running at a speed of 80 km/hr. The value of Comparative Example 1 in Table 2, the value of Comparative Example 18 in Table 3 and the value of Comparative Example 19 in Table 5 each was referred to as 100, and the value of each tested tire was expressed as an index according to the formula mentioned below. The tires having a larger value have a smaller rolling resistance and are better.

Low Rolling Resistance Index = {(rolling resistance of the tire of Comparative Example 1, 18 or 19)/(rolling resistance of tested tire)} × 100

<Tan$\delta$>

Using Toyo Seiki's spectrometer (dynamic viscoelastometer), each trial tire was tested for tan$\delta$ under an initial load of 160 g and at a frequency of 52 Hz, a measurement temperature of 25°C and a strain of 2%. The tires having a smaller value have a better low-heat-generation property.

<Cracking Resistance after Long-Term Use>

A crack of 0.5 mm was given to the center part of a JIS No. 3 test piece after long-term thermal aging, and repeated fatigue was given thereto at room temperature and at a strain of from 50 to 100%, and the frequency of fatigue repetition until the sample was cut was counted. The value at each strain was determined, and the found data were averaged to give a mean value of the tested sample. In Table 2, the value of Comparative Example 1 was referred to as 100, and in Table 3, the value of Example 9 was referred to 100; and the value of each tested sample was expressed as an index according to the formula mentioned below. The samples having a larger index value have better cracking resistance.

```
Cracking Resistance Index after Long-Term Use = {(frequency
until cutting of test sample)/(frequency until cutting of
sample of Comparative Example 1 or Example 9)} × 100
```

<Fatigue Resistance after Long-Term Running of Tire>

A formed and vulcanized trial tire was given a side force of 15 kN under a normal inner pressure and a normal load in an atmosphere at 40°C and at a speed of 60 km/hr, and the drum test was carried out for 2 days. After the test, the rubber of the layer of the inner liner adjacent to the carcass ply in the crown center position (inner liner b layer rubber) was cut out. The tensile stress at break (TSb) of the thus-cut test piece was measured according to JIS K 6251:2004, at 23°C and at a pulling rate of 200 ± 20 mm/min. The value of Comparative Example 19 was referred to as 100, and the value of each tested sample was expressed as an index according to the formula mentioned below. The samples having a larger index value have better fatigue resistance.

```
Fatigue Resistance Index after long-term running of tire =
{(tensile stress at break (TSb) of test sample)/(tensile
stress at break (TSb) of sample of Comparative Example 19)}
× 100
```

Examples 1 to 11, and Comparative Examples 1 to 18

As in Tables 1 to 3 each showing the formulation of the belt wedge rubber in the belt portion 5, 29 types of belt wedge rubber compositions for use in Examples 1 to 11 and Comparative Examples 1 to 18 were produced according to an ordinary method. The belt wedge rubber composition was vulcanized in the manner of simulating the belt wedge rubber temperature in tire vulcanization (in two-stage vulcanization, both temperatures in two stages) thereby preparing test pieces for measurement of tan$\delta$ and cracking resistance after long-term use. The belt wedge rubber temperature in tire vulcanization was simulated by burying a thermocouple in the belt wedge rubber layer and measuring the temperature change relative to the vulcanization time in the vulcanization method for a tire having a tire size of 11R 22.5 mentioned below, and by feeding back the results to the vulcanization temperature for the test piece.

Tan$\delta$ was measured according to the above-mentioned method. Next, a JIS No. 3 test piece was sealed up in a container having a nitrogen atmosphere, and left in a gear oven at 100°C for 24 hours to give a JIS No. 3 test piece after long-term thermal aging. The JIS No. 3 test piece after long-term thermal aging was tested for cracking resistance after long-term use according to the above-mentioned method. The results are shown in Tables 2 and 3.

Next, 16 types of the belt wedge rubbers of Examples 1 to 11 and Comparative Examples 3, 11, 14, 15 and 17 among the above were used for the belt portion to prepare 16 types of unvulcanized casing portions, for which the tire size was 11R 22.5 in all cases. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate temperature at the latest vulcanization point of the belt wedge rubber was 140°C, and the ultimate temperature at the latest vulcanization point of the bead portion was 155°C. The vulcanization time was 30 minutes in every case. Separately, a precured tread member was prepared through vulcanization molding under heat at 160°C to have a tread pattern previously given thereto.

Next, the bonding face of the tire casing and that of the precured tread member were buffed with a buffing machine, and then a cushion rubber to bond the tire casing and the precured tread member was produced according to the formulation shown in Table 1. The unvulcanized cushion rubber was stuck to each bonding face of the tire casing.

Next, each precured tread member was stuck to each tire casing, and thereafter vulcanized in a vulcanization apparatus at 120°C for 2 hours, thereby giving a tire with the tire casing and the precured tread member bonding together. In this case, the ultimate temperature at the latest vulcanization point of the belt wedge rubber layer was 120°C.

Thus produced, those 16 types of tires (tire size 11R 22.5) were evaluated for the low rolling resistance according to the above-mentioned method. The evaluation results are shown in Tables 2 and 3.

Next, 13 types of belt wedge rubbers of Comparative Examples 1, 2, 4 to 10, 12, 13, 16 and 18 among the above were used in the belt portion to prepare 13 types of unvulcanized casing portions, for which the tire size was 11R 22.5 in all cases. An unvulcanized tread member was stuck to the outside in the tire radial direction of the unvulcanized casing portion, thereby producing 13 types of unvulcanized tires. These 13 types of unvulcanized tires were vulcanized according to ordinary one-stage vulcanization, thereby producing 13 types of tires.

Thus produced, those 13 types of tires (tire size 11R 22.5) were evaluated for the low rolling resistance according to the above-mentioned method. The evaluation results are shown in Tables 2 and 3. [Table 1]

Table 1

| Formulation (part by mass) | Belt Wedge Rubber in Belt Portion | Cushion Rubber |
|---|---|---|
| Natural Rubber | | 100 |
| Synthetic Isoprene Rubber | As in Table 2 and Table 3 | - |
| Carbon Black | | 35 *1 |
| Silica | | - |
| Spindle Oil | - | 10 |
| Antiaging Agent *2 | 2 | 2 |
| Organic Acid Cobalt Salt *3 | 0.3 | - |
| Zinc Flower | 8 | 5 |
| Stearic Acid | 2 | 3 |
| Accelerator DZ *4 | 1 | - |
| Accelerator TBzTD *5 | - | 0.2 |
| Accelerator NS *6 | - | 0.8 |
| Accelerator r M *7 | - | 0.5 |

(continued)

| Formulation (part by mass) | Belt Wedge Rubber in Belt Portion | Cushion Rubber |
|---|---|---|
| Sulfur | 5 | 3 |

[Notes]
*1: HAF(N-330), Asahi Carbon's trade name "Asahi#70" (nitrogen adsorption specific surface area: 77 m$^2$/g)
*2: N-(1,3-dimethylbutyl)-N'-phenyl-p-phenylenediamine, Ouchi Shinko Chemical Industry's trade name "Nocrac 6C"
*3: OM Group's trade name "Manobond C225" (registered trademark) (cobalt content 22.5%)
*4: N,N'-dicyclohexyl-2-benzothiazolylsulfenamide, Ouchi Shinko Chemical Industry's trade name "Nocceler DZ"
*5: Tetrabenzylthiuramdisulfide, Sanshin Chemical Industry's trade name "Sanceler TBZTD"
*6: N-tert-butyl-2-benzothiazolylsulfenamide, Sanshin Chemical Industry's trade name "Sanceler NS"
*7: 2-mercaptobenzothiazole, Ouchi Shinko Chemical Industry's trade name "Nocrac M-P"

[Table 2]

Table 2

| | | Example | | | | | | | | Comparative Example | | | | | | | | | | | |
|---|---|---|---|---|---|---|---|---|---|---|---|---|---|---|---|---|---|---|---|---|---|
| | Belt Wedge Rubber in Belt Portion | 1 | 2 | 3 | 4 | 5 | 6 | 7 | 8 | 1 | 2 | 3 | 4 | 5 | 6 | 7 | 8 | 9 | 10 | 11 |
| Formulation (part by mass) | Natural Rubber | 100 | 100 | 100 | 100 | 100 | 100 | 100 | 100 | 100 | 100 | 100 | 100 | 100 | 100 | 100 | 100 | 100 | 100 | 100 |
| | Carbon Black HAF *8 | 60 | 45 | - | - | - | - | - | - | 60 | 35 | 35 | 45 | - | - | - | - | - | - | - |
| | Carbon Black FEF *9 | - | - | 45 | 40 | 40 | 45 | 50 | 50 | - | - | - | - | 40 | 45 | 45 | 50 | 50 | - | - |
| | Carbon Black GPF *10 | - | - | - | - | - | - | - | - | - | - | - | - | - | - | - | - | - | 50 | 50 |
| | Silica *11 | - | - | 5 | 10 | - | - | - | 5 | - | - | - | - | - | 5 | - | - | 5 | - | - |
| | Vulcanization Method | 2-stage vulcani-zation | 2-stage vulcani-zation | 2-stage vulcani-zation | 2-stage vulcani-zation | 2-stage vulcani-zation | 2-stage vulcani-zation | 2-stage vulcani-zation | 2-stage vulcani-zation | 1-stage vulcani-zation | 1-stage vulcani-zation | 2-stage vulcani-zation | 1-stage vulcani-zation | 1-stage vulcani-zation | 1-stage vulcani-zation | 1-stage vulcani-zation | 1-stage vulcani-zation | 1-stage vulcani-zation | 1-stage vulcani-zation | 2-stage vulcani-zation |
| Evaluation Results | Low Rolling Resistance | 101 | 102 | 102 | 103 | 103 | 102 | 102 | 102 | 100 | 103 | 103 | 101 | 102 | 102 | 102 | 101 | 101 | 102 | 103 |
| | tanδ | 0.19 | 0.16 | 0.16 | 0.2 | 0.15 | 0.2 | 0.16 | 0.17 | 0.2 | 0.2 | 0.15 | 0.19 | 0.16 | 0.2 | 0.2 | 0.2 | 0.2 | 0.16 | 0.15 |
| | Cracking Resistance after Long-Term Use | 108 | 104 | 110 | 105 | 102 | 107 | 108 | 107 | 100 | 80 | 95 | 96 | 78 | 85 | 83 | 85 | 86 | 74 | 97 |

[Notes]

*8: HAF (N-330), Asahi Carbon's trade name "Asahi #70" (nitrogen adsorption specific surface area: 77 $m^2$/g)

*9: FEF (N-550), Asahi Carbon's trade name "Asahi #60" (nitrogen adsorption specific surface area: 40 $m^2$/g)

*10: GPF (N-660), Asahi Carbon's trade name "Asahi #55" (nitrogen adsorption specific surface area: 26 $m^2$/g)

*11: Tosoh Silica's trade name "Nipsil AQ" (BET specific surface area: 220 $m^2$/g)

[Table 3]

Table 3

| Belt Wedge Rubber in Belt Portion | | Example | | | Comparative Example | | | | | | |
|---|---|---|---|---|---|---|---|---|---|---|---|
| | | 9 | 10 | 11 | 12 | 13 | 14 | 15 | 16 | 17 | 18 |
| Formulation (part by mass) | Natural Rubber | 70 | 100 | 100 | 70 | 100 | 100 | 100 | 100 | 100 | 100 |
| | Synthetic Isoprene Rubber *12 | 30 | - | - | 30 | - | - | - | - | - | - |
| | Carbon Black HAF *8 | - | 45 | - | - | - | - | - | - | 45 | - |
| | Carbon Black FEF *9 | 45 | - | 60 | 45 | 35 | 35 | 35 | 35 | - | 60 |
| | Silica *11 | 5 | 5 | 5 | 5 | - | - | 5 | 5 | 5 | 5 |
| Vulcanization Method | | 2-stage vulcanization | 2-stage vulcanization | 2-stage vulcanization | 1-stage vulcanization | 1-stage vulcanization | 2-stage vulcanization | 2-stage vulcanization | 1-stage vulcanization | 2-stage vulcanization | 1-stage vulcanization |
| Evaluation Results | Low Rolling Resistance | 102 | 102 | 100 | 101 | 102 | 103 | 103 | 103 | 101 | 100 |
| | tanδ | 0.16 | 0.17 | 0.21 | 0.19 | 0.16 | 0.14 | 0.14 | 0.14 | 0.19 | 0.2 |
| | Cracking Resistance after Long-Term Use | 100 | 108 | 105 | 88 | 70 | 90 | 95 | 75 | 98 | 95 |

[Notes]

*8, *9 and *11 are the same as in Table 2.

*12: JSR's polyisoprene rubber (IR), trade name "IR2200"

EP 2 633 987 B1

Examples 12 to 19, and Comparative Examples 19 to 28

As in Table 4 and Table 5 each showing the formulation of the coating rubber composition for carcass ply, 19 types of inner liner b layer rubber compositions for use in Examples 12 to 19 and Comparative Examples 19 to 28 were produced according to an ordinary method.

Next, 11 types of the rubber compositions of Examples 12 to 19 and Comparative Examples 20, 21 and 24 among the above were used for the inner liner b layer to prepare 11 types of unvulcanized casing portions, for which the tire size was 11R 22.5 in all cases. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate vulcanization temperature at the latest vulcanization point of the outermost belt layer was 140°C, the ultimate vulcanization temperature of the inner liner b layer at the crown center position was 150°C, and the ultimate vulcanization temperature at the latest vulcanization point of the bead portion was 155°C. The vulcanization time was 30 minutes in every case.

Separately, a precured tread member was prepared through vulcanization molding under heat at 160°C to have a tread pattern previously given thereto.

Next, the bonding face of the tire casing and that of the precured tread member were buffed with a buffing machine, and then a cushion rubber to bond the tire casing and the precured tread member was produced according to the formulation shown in Table 4. The unvulcanized cushion rubber was stuck to each bonding face of the tire casing.

Next, each precured tread member was stuck to each tire casing, and thereafter vulcanized in a vulcanization apparatus at 120°C for 2 hours, thereby giving a tire with the tire casing and the precured tread member bonding together. In this case, the ultimate vulcanization temperature at the latest vulcanization point of the outermost belt layer was 120°C, and the ultimate vulcanization temperature of the inner liner b layer at the crown center position was 120°C.

Thus produced, those 11 types of tires (tire size 11R 22.5) were evaluated for the low rolling resistance and the fracture resistance after long-term running of the tire, according to the above-mentioned methods. The evaluation results are shown in Table 5.

Next, 7 types of the belt compositions of Comparative Examples 19, 22, 23 and 25 to 28 among the above were used for the inner liner b layer to prepare 7 types of unvulcanized casing portions, for which the tire size was 11R 22.5 in all cases. An unvulcanized tread member was stuck to the outside in the tire radial direction of the unvulcanized casing portion, thereby producing 7 types of unvulcanized tires. These 7 types of unvulcanized tires were vulcanized according to ordinary one-stage vulcanization, thereby producing 7 types of tires.

Thus produced, those 7 types of tires (tire size 11R 22.5) were evaluated for the low rolling resistance and the fracture resistance after long-term running of tire, according to the above-mentioned methods. The evaluation results are shown in Table 5. [Table 4]

Table 4

| Formulation (part by mass) | Inner Liner b Layer Rubber | Cushion Rubber |
|---|---|---|
| Natural Rubber | 100 | 100 |
| Carbon Black | As in Table 5 | 35 *21 |
| Silica | | - |
| Spindle Oil | - | 10 |
| Antiaging Agent *22 | 1 | 2 |
| Organic Acid Cobalt Salt *23 | 0.5 | |
| Zinc Flower | 5 | 5 |
| Stearic Acid | 2 | 3 |
| Accelerator DZ *24 | 1 | - |
| Accelerator TBzTD *25 | - | 0.2 |
| Accelerator NS *26 | - | 0.8 |

(continued)

| Formulation (part by mass) | Inner Liner b Layer Rubber | Cushion Rubber |
|---|---|---|
| Accelerator M *27 | - | 0.5 |
| Sulfur | 5 | 3 |

[Notes]
*21: HAF(N-330), Asahi Carbon's trade name "Asahi#70" (nitrogen adsorption specific surface area: 77 $m^2$/g)
*22: N-(1,3-dimethylbutyl)-N'-phenyl-p-phenylenediamine, Ouchi Shinko Chemical Industry's trade name "Nocrac 6C"
*23: OM Group's trade name "Manobond C225" (registered trademark) (cobalt content 22.5%)
*24: N,N'-dicyclohexyl-2-benzothiazolylsulfenamide, Ouchi Shinko Chemical Industry's trade name "Nocceler DZ"
*25: Tetrabenzylthiuram disulfide, Sanshin Chemical Industry's trade name "Sanceler TBZTD"
*26: N-tert-butyl-2-benzothiazolylsulfenamide, Sanshin Chemical Industry's trade name "Sanceler NS"
*27: 2-mercaptobenzothiazole, Ouchi Shinko Chemical Industry's trade name "Nocrac M-P"

[Table 5]

Table 5

| Inner Liner b Layer Rubber | | Example | | | | | | | | Comparative Example | | | | | | | | | |
|---|---|---|---|---|---|---|---|---|---|---|---|---|---|---|---|---|---|---|---|
| | | 12 | 13 | 14 | 15 | 16 | 17 | 18 | 19 | 19 | 20 | 21 | 22 | 23 | 24 | 25 | 26 | 27 | 28 |
| Formulation | Natural Rubber | 100 | 100 | 100 | 100 | 100 | 100 | 100 | 100 | 100 | 100 | 100 | 100 | 100 | 100 | 100 | 100 | 100 | 100 |
| | Carbon Black N330 *28 | - | - | - | - | - | - | - | - | 50 | 50 | - | - | - | - | - | - | - | - |
| | Carbon Black N550 *29 | - | 35 | 45 | 50 | - | - | - | - | - | - | 30 | 35 | 45 | - | - | - | - | - |
| | Carbon Black N660 *30 | 50 | - | - | - | 60 | 35 | 45 | 45 | - | - | - | - | - | 30 | 35 | 45 | 50 | 60 |
| | Silica *31 | - | - | - | - | - | - | - | 5 | - | - | - | - | - | - | - | - | - | - |
| Vulcanization Method | | 2-stage vulcani-zation | 2-stage vulcani-zation | 2-stage vulcani-zation | 2-stage vulcani-zation | 2-stage vulcani-zation | 2-stage vulcani-zation | 2-stage vulcani-zation | 2-stage vulcani-zation | 1-stage vulcani-zation | 2-stage vulcani-zation | 2-stage vulcani-zation | 1-stage vulcani-zation | 1-stage vulcani-zation | 2-stage vulcani-zation | 1-stage vulcani-zation | 1-stage vulcani-zation | 1-stage vulcani-zation | 1-stage vulcani-zation |
| Evaluation Results | Low Rolling Resistance (index) | 103 | 103 | 101 | 102 | 102 | 105 | 104 | 103 | 100 | 100 | 104 | 102 | 100 | 106 | 105 | 102 | 101 | 99 |
| | Fracture Resistance after long-term running of tire (index) | 115 | 105 | 110 | 120 | 120 | 104 | 108 | 115 | 100 | 105 | 97 | 92 | 99 | 98 | 91 | 95 | 98 | 101 |

[Notes]

*28: HAF(N-330), Asahi Carbon's trade name "Asahi#70" (nitrogen adsorption specific surface area: 77 $m^2$/g)

*29: FEF(N-550), Asahi Carbon's trade name "Asahi#60" (nitrogen adsorption specific surface area: 40 $m^2$/g)

*30: GPF(N-660), Asahi Carbon's trade name "Asahi#55" (nitrogen adsorption specific surface area: 26 $m^2$/g)

*31: Tosoh Silica's trade name "Nipsil AQ" (BET specific surface are 220 $m^2$/g)

EP 2 633 987 B1

As obvious from Tables 2 and 3, the belt wedge rubbers of Examples 1 to 11 are all better than the comparative belt wedge rubbers of Comparative Examples 1 to 18 in point of tanδ and the cracking resistance after long-term use. In addition, the obtained tires of Examples 1 to 11 all had low rolling resistance and are excellent.

As obvious from Table 5, the inner liner b layers of Examples 12 to 19 are all better than the comparative inner liner b layers of Comparative Examples 19 to 28 in point of the low rolling resistance and the fracture resistance after long-term running of tire. In addition, the obtained tires of Examples 12 to 19 all had low rolling resistance and are excellent.

Industrial Applicability

According to the production method for a tire casing and a tire of the present invention, there can be obtained a tire having improved low-heat-generation property and durability, and the production method of the present invention is favorably used for production of various types of pneumatic tires, especially for pneumatic radial tires for vans, large-sized vehicles (for trucks, buses, construction vehicles, etc.) and others.

Description of Reference Numerals and Signs

| | |
|---|---|
| 1 | Tire |
| 2,2' | Bead Core |
| 3,3' | Stiffener |
| 4 | Carcass Ply |
| 5 | Belt Portion |
| 5a | Innermost Belt Layer |
| 5b | Inside Belt Layer to Form Crossing Layer |
| 5c | Outside Belt Layer to Form Crossing Layer |
| 5d | Outermost Belt Layer |
| 6 | Tread Portion |
| 7, 7' | Sidewall Rubber |
| 8 | Inner Liner |
| 8a | Inner Liner a Layer |
| 8b | Inner Liner b Layer |
| 16, 16' | Belt Wedge Rubber |
| 17 | Belt End Cover Rubber |
| 17a, 17b, 17c, 17d | Belt End Cover Rubber of Each Belt Layer |
| M | Side Portion |
| N | Bead Portion |
| A | Tire Casing |
| B | Precured Tread Member |
| CL | Crown Center |

**Claims**

1. A method for producing a tire casing (A) by vulcanizing a casing portion comprising a belt portion (5) composed of multiple belt layers (5a-5d), a side portion (M) and a bead portion (N), the method including at least one method selected from the following (a) and (b):

   (a) in which a rubber composition containing carbon black having a nitrogen adsorption specific surface area of from 38 to 99 $m^2$/g as defined in JIS K 6217-2:2001, in an amount of from 40 to 60 parts by mass relative to 100 parts by mass of the rubber component therein is used as the belt wedge rubber (16, 16') of the belt portion;
   (b) in which the tire casing comprises a carcass ply (4) and an inner liner (8) composed of multiple layers (8a, 8b), and a rubber composition containing carbon black having a nitrogen adsorption specific surface area of from 25 to 60 $m^2$/g as defined in JIS K 6217-2:2001, in an amount of from 45 to 60 parts by mass relative to 100 parts by mass of the rubber component therein is used as the layer of the inner liner adjacent to the carcass ply.

2. The method for producing a tire casing according to claim 1, wherein the vulcanization method for the casing portion is a method of surrounding the casing portion from the outside by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

3. The method for producing a tire casing according to claim 1 or 2, wherein the ultimate vulcanization temperature of the belt wedge rubber or the outermost belt layer in the belt portion during vulcanization of the casing portion is from 110 to 160°C, the ultimate vulcanization temperature of the bead portion is from 125 to 180°C, and the ultimate vulcanization temperature at the latest vulcanization point of the belt wedge rubber or the outermost belt layer is lower by from 2 to 25°C than the ultimate vulcanization temperature at the latest vulcanization point of the bead portion.

4. The method for producing a tire casing according to any of claims 1 to 3, wherein the rubber composition contains silica in an amount of at most 10 parts by mass relative to 100 parts by mass of the rubber component therein.

5. The method for producing a tire casing according to any of claims 1 to 4, wherein tanδ of the belt wedge rubber, under an initial load of 160 g and at a frequency of 52 Hz, a measurement temperature of 25°C and a strain of 2% is at most 0.17.

6. A method for producing a tire (1) by molding a tire casing (A) through vulcanization of a casing portion comprising a belt portion (5) composed of multiple belt layers (5a-5d), a side portion (M) and a bead portion (N), vulcanizing a tread member having at least a tread portion (6) to form a precured tread member (B), and thereafter bonding the tire casing and the precured tread member together and integrally vulcanizing and molding them into a tire, the method including at least one method selected from the following (a) and (b):

   (a) in which a rubber composition containing carbon black having a nitrogen adsorption specific surface area of from 38 to 99 $m^2$/g as defined in JIS K 6217-2:2001, in an amount of from 40 to 60 parts by mass relative to 100 parts by mass of the rubber component therein is used as the belt wedge rubber (16, 16') of the belt portion;
   (b) in which the tire casing comprises a carcass ply (4) and an inner liner (8) composed of multiple layers (8a, 8b), and a rubber composition containing carbon black having a nitrogen adsorption specific surface area of from 25 to 60 $m^2$/g as defined in JIS K 6217-2:2001, in an amount of from 45 to 60 parts by mass relative to 100 parts by mass of the rubber component therein is used as the layer of the inner liner adjacent to the carcass ply.

7. The method for producing a tire according to claim 6, wherein the vulcanization method for the casing portion is a method of surrounding the casing portion from the outside by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

8. The method for producing a tire according to claim 6 or 7, wherein the ultimate vulcanization temperature of the belt wedge rubber or the outermost belt layer (5d) in the belt portion during vulcanization of the casing portion is from 110 to 160°C, the ultimate vulcanization temperature of the bead portion is from 125 to 180°C, and the ultimate vulcanization temperature at the latest vulcanization point of the belt wedge rubber or the outermost belt layer is lower by from 2 to 25°C than the ultimate vulcanization temperature at the latest vulcanization point of the bead portion.

9. The method for producing a tire according to any of claim 6 to 8, wherein the ultimate temperature at the latest vulcanization point of the belt wedge rubber in bonding the tire casing and the precured tread member together and vulcanizing them is lower than the ultimate temperature at the latest vulcanization point of the belt wedge rubber in vulcanizing the casing portion.

10. The method for producing a tire according to any of claim 6 to 8, wherein the ultimate temperature at the crown center (CL) position of the layer of the inner liner adjacent to the carcass ply in bonding the tire casing and the precured tread member together and vulcanizing them is lower than the ultimate temperature at crown center position of the layer of the inner liner adjacent to the carcass ply in vulcanizing the casing portion.

11. The method for producing a tire according to any of claims 6 to 10, wherein the tire casing and the precured tread member are bonded via an unvulcanized cushion rubber layer, and vulcanized and molded.

12. The method for producing a tire according to any of claims 6 to 11, wherein the rubber composition contains silica in an amount of at most 10 parts by mass relative to 100 parts by mass of the rubber component therein.

13. The method for producing a tire according to any of claims 6 to 9, 11 and 12, wherein tanδ of the belt wedge rubber, under an initial load of 160 g and at a frequency of 52 Hz, a measurement temperature of 25°C and a strain of 2% is at most 0.17.

**Patentansprüche**

1. Verfahren zur Herstellung eines Reifenmantels (A) durch Vulkanisieren eines Mantelabschnitts, umfassend einen aus mehreren Gürtellagen (5a-5d) bestehenden Gürtelabschnitt (5), einen seitlichen Abschnitt (M) und einen Wulstabschnitt (N), wobei das Verfahren zumindest ein Verfahren einschließt, das aus den folgenden (a) und (b) gewählt ist:

(a) wobei eine Kautschukzusammensetzung, welche Industrieruß, der eine spezifische Stickstoffadsorptionsfläche von 38 bis 99 m³/g gemäß Definition in JIS K 6217-2:2001 aufweist, in einer Menge von 40 bis 60 Masseteilen bezogen auf 100 Masseteile der Kautschukkomponente in derselben enthält, als der Gürtelkeilkautschuk (16, 16') des Gürtelabschnitts verwendet wird;
(b) wobei der Reifenmantel eine Karkassenlage (4) und einen aus mehreren Lagen (8a, 8b) bestehenden inneren Liner (8) umfasst, und eine Kautschukzusammensetzung, welche Industrieruß, der eine spezifische Stickstoffadsorptionsfläche von 25 bis 60 m³/g gemäß Definition in JIS K 6217-2:2001 aufweist, in einer Menge von 45 bis 60 Masseteilen bezogen auf 100 Masseteile der Kautschukkomponente in derselben enthält, als die an die Karkassenlage angrenzende Lage des inneren Liners verwendet wird.

2. Verfahren zur Herstellung eines Reifenmantels nach Anspruch 1, wobei das Vulkanisationsverfahren für den Mantelabschnitt ein Verfahren zum Umgeben des Mantelabschnitts von außen durch die Anwendung der Vulkanisationsform ist, und der Mantelabschnitt vulkanisiert und geformt wird in solch einer Weise, dass die Wulstabschnittseite des Mantelabschnitts durch ein erstes Heizmittel erhitzt wird, die Gürtelabschnittseite des Mantelabschnitts durch ein zweites Heizmittel erhitzt wird, und die Wärmemenge pro Einheit Volumen, die der Gürtelabschnittseite durch das zweite Heizmittel zu geben ist, geringer ist als die Wärmemenge pro Einheit Volumen, die der Wulstabschnittseite durch das erste Heizmittel zu geben ist.

3. Verfahren zur Herstellung eines Reifenmantels nach Anspruch 1 oder 2, wobei die Vulkanisationsendtemperatur des Gürtelkeilkautschuks oder der äußersten Gürtellage im Gürtelabschnitt während der Vulkanisation des Mantelabschnitts 110 bis 160 °C beträgt, die Vulkanisationsendtemperatur des Wulstabschnitts 125 bis 180 °C beträgt, und die Vulkanisationsendtemperatur am Punkt spätester Vulkanisation des Gürtelkeilkautschuks oder der äußersten Gürtellage um 2 bis 25 °C niedriger ist als die Vulkanisationsendtemperatur am Punkt spätester Vulkanisation des Wulstabschnitts.

4. Verfahren zur Herstellung eines Reifenmantels nach einem der Ansprüche 1 bis 3, wobei die Kautschukzusammensetzung Siliciumdioxid in einer Menge von höchstens 10 Masseteilen bezogen auf 100 Masseteile der Kautschukkomponente in derselben enthält.

5. Verfahren zur Herstellung eines Reifenmantels nach einem der Ansprüche 1 bis 4, wobei tanδ des Gürtelkeilkautschuks, unter einer Anfangslast von 160 g und bei einer Frequenz von 52 Hz, einer Messtemperatur von 25 °C und einer Dehnung von 2%, höchstens 0,17 beträgt.

6. Verfahren zur Herstellung eines Reifens (1) durch Formen eines Reifenmantels (A) durch Vulkanisation eines Mantelabschnitts, umfassend einen aus mehreren Gürtellagen (5a-5d) bestehenden Gürtelabschnitt (5), einen seitlichen Abschnitt (M) und einen Wulstabschnitt (N), Vulkanisieren eines zumindest einen Profilabschnitt (6) aufweisenden Profilteils, um ein vorgehärtetes Profilteil (B) zu bilden, und danach Verbinden des Reifenmantels und des vorgehärteten Profilteils miteinander und einstückiges Vulkanisieren und Formen derselben zu einem Reifen, wobei das Verfahren zumindest ein Verfahren einschließt, das aus den folgenden (a) und (b) gewählt ist:

(a) wobei eine Kautschukzusammensetzung, welche Industrieruß, der eine spezifische Stickstoffadsorptionsfläche von 38 bis 99 m³/g gemäß Definition in JIS K 6217-2:2001 aufweist, in einer Menge von 40 bis 60 Masseteilen bezogen auf 100 Masseteile der Kautschukkomponente in derselben enthält, als der Gürtelkeilkautschuk (16, 16') des Gürtelabschnitts verwendet wird;

(b) wobei der Reifenmantel eine Karkassenlage (4) und einen aus mehreren Lagen (8a, 8b) bestehenden inneren Liner (8) umfasst, und eine Kautschukzusammensetzung, welche Industrieruß, der eine spezifische Stickstoffadsorptionsfläche von 25 bis 60 m$^3$/g gemäß Definition in JIS K 6217-2:2001 aufweist, in einer Menge von 45 bis 60 Masseteilen bezogen auf 100 Masseteile der Kautschukkomponente in derselben enthält, als die an die Karkassenlage angrenzende Lage des inneren Liners verwendet wird.

7. Verfahren zur Herstellung eines Reifens nach Anspruch 6, wobei das Vulkanisationsverfahren für den Mantelabschnitt ein Verfahren zum Umgeben des Mantelabschnitts von außen durch die Anwendung der Vulkanisationsform ist, und der Mantelabschnitt vulkanisiert und geformt wird in solch einer Weise, dass die Wulstabschnittseite des Mantelabschnitts durch ein erstes Heizmittel erhitzt wird, die Gürtelabschnittseite des Mantelabschnitts durch ein zweites Heizmittel erhitzt wird, und die Wärmemenge pro Einheit Volumen, die der Gürtelabschnittseite durch das zweite Heizmittel zu geben ist, geringer ist als die Wärmemenge pro Einheit Volumen, die der Wulstabschnittseite durch das erste Heizmittel zu geben ist.

8. Verfahren zur Herstellung eines Reifens nach Anspruch 6 oder 7, wobei die Vulkanisationsendtemperatur des Gürtelkeilkautschuks oder der äußersten Gürtellage (5d) im Gürtelabschnitt während der Vulkanisation des Mantelabschnitts 110 bis 160 °C beträgt, die Vulkanisationsendtemperatur des Wulstabschnitts 125 bis 180 °C beträgt, und die Vulkanisationsendtemperatur am Punkt spätester Vulkanisation des Gürtelkeilkautschuks oder der äußersten Gürtellage um 2 bis 25 °C niedriger ist als die Vulkanisationsendtemperatur am Punkt spätester Vulkanisation des Wulstabschnitts.

9. Verfahren zur Herstellung eines Reifens nach einem der Ansprüche 6 bis 8, wobei die Endtemperatur am Punkt spätester Vulkanisation des Gürtelkeilkautschuks bei Verbinden des Reifenmantels und des vorgehärteten Profilteils miteinander und deren Vulkanisieren niedriger ist als die Endtemperatur am Punkt spätester Vulkanisation des Gürtelkeilkautschuks beim Vulkanisieren des Mantelabschnitts.

10. Verfahren zur Herstellung eines Reifens nach einem der Ansprüche 6 bis 8, wobei die Endtemperatur an der Kronenmitte-(ML)-Position der an die Karkassenlage angrenzenden Lage des inneren Liners bei Verbinden des Reifenmantels und des vorgehärteten Profilteils miteinander und deren Vulkanisieren niedriger ist als die Endtemperatur an der Kronenmitteposition der an die Karkassenlage angrenzenden Lage des inneren Liners bei Vulkanisieren des Mantelabschnitts.

11. Verfahren zur Herstellung eines Reifens nach einem der Ansprüche 6 bis 10, wobei der Reifenmantel und das vorgehärtete Profilteil via eine nicht vulkanisierte Kissenkautschuklage verbunden werden, und vulkanisiert und geformt werden.

12. Verfahren zur Herstellung eines Reifens nach einem der Ansprüche 6 bis 11, wobei die Kautschukzusammensetzung Siliciumdioxid in einer Menge von höchstens 10 Masseteilen bezogen auf 100 Masseteile der Kautschukkomponente in derselben enthält.

13. Verfahren zur Herstellung eines Reifens nach einem der Ansprüche 6 bis 9, 11 und 12, wobei tanδ des Gürtelkeilkautschuks, unter einer Anfangslast von 160 g und bei einer Frequenz von 52 Hz, einer Messtemperatur von 25 °C und einer Dehnung von 2%, höchstens 0,17 beträgt.

**Revendications**

1. Procédé de fabrication d'une enveloppe (A) de pneumatique consistant à vulcaniser une partie d'enveloppe comprenant une partie de nappe d'armature (5) constituée de multiples couches de nappe d'armature (5a-5d), une partie latérale (M) et une partie de talon (N), le procédé incluant au moins un procédé choisi parmi (a) et (b) ci-après:

(a) dans lequel une composition de caoutchouc contenant du noir de carbone ayant une surface spécifique d'adsorption d'azote comprise entre 38 m$^2$/g et 99 m$^2$/g, telle que définie dans JIS K 6217-2:2001, en quantité représentant 40 à 60 parties en masse par rapport aux 100 parties en masse du composant de caoutchouc de la composition, est utilisée en tant que caoutchouc de calage (16, 16') de la nappe d'armature de la partie de nappe d'armature;

(b) dans lequel l'enveloppe de pneumatique comprend un pli de carcasse (4) et un revêtement intérieur (8) composé de multiples couches (8a, 8b), et une composition de caoutchouc contenant du noir de carbone ayant une surface spécifique d'adsorption d'azote comprise entre 25 m$^2$/g et 60 m$^2$/g, telle que définie dans JIS K 6217-2:2001, en quantité représentant 45 à 60 parties en masse par rapport aux 100 parties en masse du composant de caoutchouc de la composition, est utilisée en tant que couche du revêtement intérieur contiguë au pli de carcasse.

2. Procédé de fabrication d'une enveloppe de pneumatique selon la revendication 1, le procédé de vulcanisation employé pour la partie d'enveloppe consistant à entourer la partie d'enveloppe de l'extérieur au moyen du moule de vulcanisation; la partie d'enveloppe est vulcanisée et moulée de telle manière que le côté de partie de talon de la partie d'enveloppe est chauffé par un premier moyen de chauffage, le côté de partie de nappe d'armature de la partie d'enveloppe est chauffé par un second moyen de chauffage et la quantité de chaleur par unité de volume devant être fournie au côté de partie de nappe d'armature par le second moyen de chauffage est inférieure à la quantité de chaleur par unité de volume devant être fournie au côté de partie de talon par le premier moyen de chauffage.

3. Procédé de fabrication d'une enveloppe de pneumatique selon la revendication 1 ou 2, la température de vulcanisation finale du caoutchouc de calage de la nappe d'armature ou de la couche de nappe d'armature la plus extérieure dans la partie de nappe d'armature pendant la vulcanisation de la partie d'enveloppe étant comprise entre 110°C et 160°C, la température de vulcanisation finale de la partie de talon étant comprise entre 125°C et 180°C et la température de vulcanisation finale au tout dernier point de vulcanisation du caoutchouc de calage de la nappe d'armature ou de la couche de nappe d'armature la plus extérieure étant inférieure de 2°C à 25°C à la température de vulcanisation finale au tout dernier point de vulcanisation de la partie de talon.

4. Procédé de fabrication d'une enveloppe de pneumatique selon l'une quelconque des revendications 1 à 3, la composition de caoutchouc contenant de la silice en quantité représentant au maximum 10 parties en masse par rapport aux 100 parties en masse du composant de caoutchouc de la composition.

5. Procédé de fabrication d'une enveloppe de pneumatique selon l'une quelconque des revendications 1 à 4, la valeur tan$\delta$ du caoutchouc de calage de la nappe d'armature, sous une charge initiale de 160 g et à une fréquence de 52 Hz, à une température de mesure de 25°C et soumis à une déformation de 2%, étant de 0,17 au maximum.

6. Procédé de fabrication d'un pneumatique (1) consistant à mouler une enveloppe (A) de pneumatique en vulcanisant une partie d'enveloppe comprenant une partie de nappe d'armature (5) constituée de multiples couches de nappe d'armature (5a-5d), une partie latérale (M) et une partie de talon (N), en vulcanisant un élément de bande de roulement ayant au moins une partie de bande de roulement (6) pour former un élément de bande de roulement précuit (B) et, ensuite, en reliant l'enveloppe de pneumatique et l'élément de bande de roulement précuit, puis en vulcanisant et moulant les deux d'un seul bloc pour former un pneumatique, le procédé incluant au moins un procédé choisi parmi (a) et (b) ci-après:

(a) dans lequel une composition de caoutchouc contenant du noir de carbone ayant une surface spécifique d'adsorption d'azote comprise entre 38 m$^2$/g et 99 m$^2$/g, telle que définie dans JIS K 6217-2:2001, en quantité représentant 40 à 60 parties en masse par rapport aux 100 parties en masse du composant de caoutchouc de la composition, est utilisée en tant que caoutchouc de calage (16, 16') de la nappe d'armature de la partie de nappe d'armature;
(b) dans lequel l'enveloppe de pneumatique comprend un pli de carcasse (4) et un revêtement intérieur (8) composé de multiples couches (8a, 8b), et une composition de caoutchouc contenant du noir de carbone ayant une surface spécifique d'adsorption d'azote comprise entre 25 m$^2$/g et 60 m$^2$/g, telle que définie dans JIS K 6217-2:2001, en quantité représentant 45 à 60 parties en masse par rapport aux 100 parties en masse du composant de caoutchouc de la composition, est utilisée en tant que couche du revêtement intérieur contiguë au pli de carcasse.

7. Procédé de fabrication de pneumatique selon la revendication 6, le procédé de vulcanisation employé pour la partie d'enveloppe consistant à entourer la partie d'enveloppe de l'extérieur au moyen du moule de vulcanisation; la partie d'enveloppe est vulcanisée et moulée de telle manière que le côté de partie de talon de la partie d'enveloppe est chauffé par un premier moyen de chauffage, le côté de partie de nappe d'armature de la partie d'enveloppe est chauffé par un second moyen de chauffage et la quantité de chaleur par unité de volume devant être fournie au côté de partie de nappe d'armature par le second moyen de chauffage est inférieure à la quantité de chaleur par unité de volume devant être fournie au côté de partie de talon par le premier moyen de chauffage.

8. Procédé de fabrication de pneumatique selon la revendication 6 ou 7, la température de vulcanisation finale du caoutchouc de calage de la nappe d'armature ou de la couche de nappe d'armature la plus extérieure (5d) dans la partie de nappe d'armature pendant la vulcanisation de la partie d'enveloppe étant comprise entre 110°C et 160°C, la température de vulcanisation finale de la partie de talon étant comprise entre 125°C et 180°C et la température de vulcanisation finale au tout dernier point de vulcanisation du caoutchouc de calage de la nappe d'armature ou de la couche de nappe d'armature la plus extérieure étant inférieure de 2°C à 25°C à la température de vulcanisation finale au tout dernier point de vulcanisation de la partie de talon.

9. Procédé de fabrication de pneumatique selon l'une quelconque des revendications 6 à 8, la température finale au tout dernier point de vulcanisation du caoutchouc de calage de la nappe d'armature lors de la liaison de l'enveloppe de pneumatique et de l'élément de bande de roulement précuit et de leur vulcanisation étant inférieure à la température finale au tout dernier point de vulcanisation du caoutchouc de calage de la nappe d'armature lors de la vulcanisation de la partie d'enveloppe.

10. Procédé de fabrication de pneumatique selon l'une quelconque des revendications 6 à 8, la température finale à l'endroit de la couche du revêtement intérieur contiguë au pli de carcasse correspondant au centre de la couronne (CL) lors de la liaison de l'enveloppe de pneumatique et de l'élément de bande de roulement précuit et de leur vulcanisation étant inférieure à la température finale à l'endroit de la couche du revêtement intérieur contiguë au pli de carcasse correspondant au centre de la couronne lors de la vulcanisation de la partie d'enveloppe.

11. Procédé de fabrication de pneumatique selon l'une quelconque des revendications 6 à 10, l'enveloppe de pneumatique et l'élément de bande de roulement précuit étant reliés par le biais d'une couche de caoutchouc de rembourrage non vulcanisé, et étant vulcanisés et moulés.

12. Procédé de fabrication de pneumatique selon l'une quelconque des revendications 6 à 11, la composition de caoutchouc contenant de la silice en quantité représentant au maximum 10 parties en masse par rapport aux 100 parties en masse du composant de caoutchouc de la composition.

13. Procédé de fabrication de pneumatique selon l'une quelconque des revendications 6 à 9, 11 et 12, la valeur tan$\delta$ du caoutchouc de calage de la nappe d'armature, sous une charge initiale de 160 g et à une fréquence de 52 Hz, à une température de mesure de 25°C et soumis à une déformation de 2%, est de 0,17 au maximum.

EP 2 633 987 B1

fig.1

fig.2

25

fig.3

fig.4

fig.5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008062893 A
- JP 9272308 A
- JP 8258179 A
- JP 2000079640 A
- JP 2006111072 A
- JP 2002069237 B
- JP 2006117099 B
- JP 2010144067 B
- JP 2009051481 B
- JP 2008266517 B